# EUROPÄISCHE PATENTSCHRIFT

(11) **EP 2 497 173 B1**
(45) Veröffentlichungstag und Bekanntmachung des Hinweises auf die Patenterteilung: **02.03.2016**
(21) Anmeldenummer: 10810752.5
(22) Anmeldetag: 06.11.2010
(51) Int. Cl.: H02G 3/08, H02G 3/12

(54) **VORRICHTUNG ZUR AUFNAHME VON ELEKTRISCHEN BAUTEILEN**
DEVICE FOR RECEIVING ELECTRIC COMPONENTS
DISPOSITIF DE RÉCEPTION DE COMPOSANTS ÉLECTRIQUES

(30) Priorität: 07.11.2009 DE 102009053183
(43) Veröffentlichungstag der Anmeldung: 12.09.2012
(73) Patentinhaber: Schmitt, Jürgen, 64646 Heppenheim-Sonderbach (DE)
(72) Erfinder: Schmitt, Jürgen, 64646 Heppenheim-Sonderbach (DE)
(74) Vertreter: Sartorius, Peter
(86) Internationale Anmeldenummer: PCT/EP2010/006795
(87) Internationale Veröffentlichungsnummer: WO 2011/054542

(56) Entgegenhaltungen:
- EP-A2- 0 748 006
- EP-A2- 0 772 132
- DE-A1- 3 800 861
- DE-U1- 9 412 331
- US-A- 5 500 487

## Beschreibung

Die Erfindung betrifft eine Vorrichtung zur Aufnahme von elektrischen Bauteilen wie Schalter, Steckdosen, Bewegungsmelder, Sensoren und/oder Fühler zur Steuerung des Raumklimas mit einem" Aufnahmeteil oder Aufnahmegehäuse für Auf- oder insbesondere Unterputz, das an eine elektrische Stromversorgung angeschlossen werden kann, wobei dass das Aufnahmeteil oder Aufnahmegehäuse zur Aufnahme von mehreren nacheinander angeordneten elektrischen Bauteilen mit Hilfe von Anschlusselementen ständig an die Stromversorgung angeschlossen ist und einheitlich große und/oder eine oder mehrere standardisierte Ausnehmungen aufweist, in die die elektrischen Bauteile wie Schalter, Steckdosen und Bewegungsmelder, Sensoren oder Fühler einsetzbar sind und nach dem Einsetzvorgang mit Hilfe von Kontaktelementen direkt mit der Stromversorgung und/oder anderen elektrischen Einrichtungen in Verbindung stehen

Es sind bereits Vorrichtungen zur Aufnahme von elektrischen Bauteilen wie Schalter, Steckdosen, Bewegungsmelder, Sensoren und/oder Fühler zur Steuerung des Raumklimas mit einem Aufnahmeteil oder Aufnahmegehäuse für Auf- oder insbesondere Unterputz bekannt, die an eine elektrische Stromversorgung angeschlossen werden können. Diese einzelnen Vorrichtungen bzw. Steckdosen müssen jeweils einzeln mit den entsprechenden Stromkabeln verbunden werden. Werden mehrere Steckdosen, Bewegungsmelder, Sensoren oder dergl. in eine dazu vorgesehene Montageöffnung eingeschoben, dann muss jedes Bauteil getrennt an die Stromversorgung angeschlossen werden, was sehr zeitaufwendig ist, zumal keine Vorkehrungen vorgesehen sind, die eine gemeinsame Montage aller Bauteile möglich machen.

Es ist bereits eine Vorrichtung (DE 37 29 132 A1) bekannt zur Aufnahme von elektrischen Bauteilen, wie Schalter, Steckdosen, Bewegungsmelder, Sensoren und/oder Fühler, zur Steuerung des Raumklimas mit einem Aufnahmeteil oder Aufnahmegehäuse für Auf- oder insbesondere Unterputz, das an eine elektrische Stromversorgung angeschlossen werden kann, wobei das Aufnahmeteil oder Aufnahmegehäuse mit Hilfe von Anschlusselementen in eingebautem Zustand ständig an die Stromversorgung angeschlossen ist und einheitlich große und/oder eine oder mehrere standardisierte Ausnehmungen aufweist, in die die elektrischen Bauteile, wie Schalter, Steckdosen und Bewegungsmelder, Sensoren oder Fühler, einsetzbar sind und nach dem Einsetzvorgang mit Hilfe von Kontaktelementen direkt mit der Stromversorgung und/oder anderen elektrischen Einrichtungen in Verbindung stehen.

DE 38 00 862 A1 zeigt eine elektrische Anschlussdose. Diese besteht im Wesentlichen aus einem Gehäuse, welches eine periphere Wand sowie eine Rückwand aufweist und auf seiner Vorderseite offen ist. An Kontakte in den Anschlussdose können installierte Leitungen angeschlossen werden. Um ohne lose oder auf der Wandoberfläche installierte Leitungen, Schalter, Steckdosen oder Netzteile für elektrische Geräte dort anbringen zu können, wo eine solche Anschlussdose installiert ist, sind deren Kontakte als Gleitkontakte (Gleitkontaktbuchsen) ausgebildet, deren Achsen parallel zu einer Längsachse des Gehäuses liegen. Die Kontakte sind ausschließlich in der Nähe der peripheren Wand so angeordnet, dass in dem Zentrum der Anschlussdose ein freier Raum verbleibt. In den freien Raum kann ein diesen im Wesentlichen ausfüllendes Einschubelement mit Steckkontakten unter Kontaktbildung eingeschoben werden. Aus dem bekannten Dokument DE 38 00862 A1 ist jedoch keine Anregung zu entnehmen ein Aufnahmeteil oder Aufnahmegehäuse zur Aufnahme von mehreren nacheinander angeordneten elektrischen Bauteilen zu bilden, dass entsprechend ausgebaut bzw. verlängert werden kann und als vorgefertigte Unterputzdose ohne bauliche Veränderungen Steckdosen aufzunehmen.

Das gleiche gilt auch für die Dokumente EP 0 748 006 A2 und DE 94 12 331 U1.

Das Dokument EP 0 748 006 A2 zeigt ein System zur mechanischen und elektrischen Verbindung zwischen elektronischen Geräten. Das Gerät umfasst ein Gehäuse mit einer Platte mit eine elektronischen Vorrichtung mit deren Hilfe Informationen und / oder Daten übertragen werden können. Die elektronische Vorrichtung, die mechanisch kompatibel ist, weist neben der elektrischen Unterputzeinrichtung entsprechendes Montage-Zubehör auf.

Das Dokument DE 9 412 331 U1 zeigt eine Mehrfachsteckdose- mit einem Gehäuse und einem starr daran angebrachten Normstecker, insbesondere für das Anschließen an das Haushalts-Stromnetz und eine Mehrzahl von Normsteckdosen. Das Gehäuse ist ein sechs flächiges würfelförmiges Gehäuse, wobei auf einer der sechs Flächen der Normstecker ausgebildet ist und auf den anderen fünf Flächen die Normsteckdosen angeordnet sind. Sämtliche Normsteckdosen und der Normstecker sind auf den jeweiligen Flächen mittig angeordnet, wobei der Normstecker so ausgebildet ist, dass er zu jeder Steckdose eines weiteren benachbarten Moduls passt. Die erfindungsgemäße Vorrichtung zeigt dagegen eine Unterputzeinrichtung, die aus mehreren Modulen besteht, die auch beliebig verlängern werden können, um zahlreiche Steckdosen aufzunehmen zu können.

Der Erfindung liegt die Aufgabe zugrunde, die Vorrichtung zur Aufnahme von elektrischen Bauteilen wie Schalter, Steckdosen, Bewegungsmelder, Sensoren und/oder Fühler zur Steuerung des Raumklimas mit einem Aufnahmeteil oder Aufnahmegehäuse derart auszubilden und anzuordnen, dass dieses als ein einziges Bauteil, ganz gleich, wie viele einzelne elektrische Bauteile benötigt werden, auf einfache, zeitsparende und kostengünstige Weise montiert werden kann.

Gelöst wird die Aufgabe erfindungsgemäß durch folgende Merkmale:
a) dass das Aufnahmeteil oder Aufnahmegehäuse in an die elektrische Stromversorgung montiertem Zustand ständig anschließbare Kontakte aufweist, die durch Einsetzen des elektrischen Bauteils von ober in das Aufnahmeteil oder Aufnahmegehäuse automatisch mit der elektrischen Stromversorgung verbunden sind.
b) dass im Aufnahmeteil oder Aufnahmegehäuse ein oder mehrere Führungselemente vorgesehen sind, die mit einem oder mehreren am elektrischen Bauteil vorgesehenen Führungselementen beim Einsetzvorgang des elektrischen Bauteils in die Ausnehmung des Aufnahmeteils oder Aufnahmegehäuses zusammenwirken und das elektrische Bauteil derart ausrichten, dass im eingesetzten Zustand das elektrischer Bauteil mit der elektrischen Stromversorgung oder einem anderen elektronischen Bauelement in einer Wirkverbindung steht,
c) die Außenkontur der einzelnen elektrischen Bauteile in etwa gleich ist, sodass sie in jede beliebige Ausnehmung des Aufnahmeteils oder Aufnahmegehäuses eingesetzt werden können,
d) dass die einzelnen Ausnehmungen des Aufnahmegehäuses einen rechteckförmigen, runden, ovalen oder mehreckförmigen Querschnitt aufweisen, der mit den übrigen Innenkonturen in etwa übereinstimmt und derart gestaltet ist, dass jedes elektrische Bauteil mit unterschiedlicher Funktion in die Ausnehmung eingesetzt werden kann.
f) Aufnahmeteil oder Aufnahmegehäuse um weitere Aufnahmeteile oder Aufnahmegehäuse erweitert werden kann,
   die untereinander mit Hilfe von Verbindungselementen, insbesondere Kraft- und/oder Formschlusselementen, verbunden werden.

Hierzu ist es vorteilhaft, dass die elektrische Einrichtung ein Sender und/oder Empfangsteil ist. Diese können einzeln oder auch gemeinsam mit anderen elektrischen Bauteilen, wie Schalter, Steckdosen oder dergl. mit Hilfe eines Aufnahmeteils oder Aufnahmegehäuse in eine entsprechend vorbereitete Maueröffnung sehr schnell und damit kostensparend montiert und an die verbreitete Stromversorgung angekuppelt werden, ohne dass der Monteur hierzu Werkzeuge benötigt.

Eine zusätzliche Möglichkeit ist gemäß einer Weiterbildung der Erfindung, dass das Aufnahmeteil oder Aufnahmegehäuse in an die elektrische Stromversorgung montiertem Zustand ständig anschließbare Kontakte aufweist, die durch Einsetzen des elektrischen Bauteils automatisch mit der elektrischen Stromversorgung verbunden sind. Die Kontaktelemente können als Kupplungen bzw. Stecker ausgebildet sein, sodass durch Einsetzen des Aufnahmeteils oder des Aufnahmegehäuses automatisch auch eine Energieversorgung zum eingesetzten Teil hergestellt wird.

Ferner ist es vorteilhaft, dass im Aufnahmeteil oder Aufnahmegehäuse ein oder mehrere Führungselemente vorgesehen sind, die mit einem oder mehreren am elektrischen Bauteil vorgesehenen Führungselementen beim Einsetzvorgang des elektrischen Bauteils in die Ausnehmung des Aufnahmeteils oder Aufnahmegehäuses zusammenwirken und das elektrische Bauteil derart ausrichten, dass es im eingesetzten Zustand mit der elektrischen Stromversorgung oder einem anderen elektronischen Bauelement in einer Wirkverbindung steht. Hierdurch wird die Montage der elektrischen und/oder elektronischen Bauelemente wesentlich verbessert und auch ein erschütterungsfreier fester Sitz des Bauelements in der Montageöffnung sichergestellt.

Vorteilhaft ist es hierzu auch, dass die in die Ausnehmung des Aufnahmeteils oder Aufnahmegehäuses eingesetzten elektrischen Bauteile mit Hilfe eines Verriegelungselements festgesetzt werden können. Auf diese Weise werden Montagewerkzeuge überflüssig, da zur Verbindung der Bauelemente mit dem Aufnahmeteil eine zeitsparende feste Verriegelung möglich ist, die je nach Ausführungsform derart ausgebildet sein kann, dass sie wieder gelöst werden kann, um auch ein elektrisches Bauteil gegen ein anderes Bauteil auszuwechseln.

Gemäß einer bevorzugten Ausführungsform der erfindungsgemäßen Lösung ist schließlich vorgesehen, dass die Außenkontur der einzelnen elektrischen Bauteile in etwa gleich ist, sodass sie in jede beliebige Ausnehmung des Aufnahmeteils oder Aufnahmegehäuses eingesetzt werden können.

Von besonderer Bedeutung ist für die vorliegende Erfindung, dass an jedes Aufnahmeteil oder Aufnahmegehäuse ein weiteres Aufnahmeteil oder Aufnahmegehäuse mit Hilfe von Form- und/oder Kraftschlusselementen angeschlossen werden kann. Hierzu kann das Aufnahmeteil oder Aufnahmegehäuse an seinem entsprechenden stirnseitigen Enden mit Kupplungselemente versehen sein, sodass ein einzelnes Aufnahmeteil oder Aufnahmegehäuse an ein weiteres Aufnahmeteil oder Aufnahmegehäuse form- und/oder kraftschlüssig angeschlossen werden kann und somit das Aufnahmeteil oder Aufnahmegehäuse beliebig vergrößern und auch verkleinert werden kann.

Im Zusammenhang mit der erfindungsgemäßen Ausbildung und Anordnung ist es von Vorteil, dass das Aufnahmeteil zumindest eine Abdeckplatte aufweist, an die das Aufnahmegehäuse zur Aufnahme der elektrischen Bauteile angeschlossen ist. Je nach Wunsch eines Bauherrn kann das Aufnahmeteil zumindest eine Abdeckplatte aufweisen, an deren Unterseite rechtwinklig dazu verlaufende Führungselemente oder auch Kontaktelemente angeschlossen werden können, sodass auf die Außenwandung des Aufnahmegehäuses verzichtet werden kann.

Vorteilhaft ist es ferner, dass die einzelnen Ausnehmungen des Aufnahmegehäuses einen rechteckförmigen, runden, ovalen oder mehreckförmigen Querschnitt aufweisen, der mit den übrigen Innenkonturen in etwa übereinstimmt und derart gestaltet ist, dass jedes elektrische Bauteil mit unterschiedlicher Funktion in die Ausnehmung eingesetzt werden kann, die mit ihrer Innenkontur an die Außenkontur der Ausnehmung in der Maueröffnung angepasst ist.

Vorteilhaft ist es auch, dass das Aufnahmeteil oder Aufnahmegehäuse mit Hilfe von Anschlusselementen ständig an die Stromversorgung angeschlossen ist und eine oder mehrere einheitlich große und/oder standardisierte Ausnehmungen aufweist, in die die elektrischen Bauteile, wie Schalter, Steckdosen und Bewegungsmelder, Sensoren oder Fühler, einsetzbar sind und nach dem Einsetzvorgang mit Hilfe von Kontaktelementen direkt mit der Stromversorgung und/oder anderen elektrischen Einrichtungen in Verbindung gebracht werden können, wobei das Aufnahmeteil oder Aufnahmegehäuse um weitere Aufnahmeteile oder Aufnahmegehäuse erweitert werden kann, die untereinander mit Hilfe von Verbindungselementen, insbesondere Kraft- und/oder Formschlusselementen, verbunden werden. Auf diese Weise können also auch beliebige Steckertypen oder Kupplungstypen mit unterschiedlichen Normen in das Aufnahmeteil oder Aufnahmegehäuse eingesetzt werden. Verwendet der Anwender z. B. einen Stecker eines elektrischen Gerätes aus Japan oder Großbritannien, so braucht lediglich das entsprechende Kupplungsgehäuse aus der Ausnehmung herausgenommen und durch ein der Norm des Landes entsprechendes Kupplungsgehäuse ersetzt zu werden. Damit können derart ausgebildete Aufnahmeteile oder Aufnahmegehäuse weltweit eingesetzt werden. Hierzu ist es vorteilhaft, dass das Kraft- und/oder Formschlusselement derart als Einschubelement, insbesondere als Schwalbenschwanzführung, ausgeführt ist, dass ein Aufnahmeteil oder Aufnahmegehäuse von oben her in das angrenzende Aufnahmeteil oder Aufnahmegehäuse eingeschoben werden kann und nach dem Einschubvorgang die stromführenden Teile zur Stromversorgung der Aufnahmeteile oder Aufnahmegehäuse miteinander in Kontakt gebracht werden können.

Weitere Vorteile und Einzelheiten der Erfindung sind in den Patentansprüchen und in der Beschreibung erläutert und in den Figuren dargestellt.

Es zeigen:
- Fig. 1: eine Vorrichtung zur Aufnahme von elektrischen Bauteilen, wie Schalter, Steckdosen Bewegungsmelder, Sensoren und/oder Fühler zur Steuerung des Raumklimas mit einem Aufnahmeteil oder Aufnahmegehäuse für Auf- oder insbesondere Unterputz, das an eine elektrische Stromversorgung angeschlossen werden kann,
- Fig. 2: die Vorrichtung zur Aufnahme von elektrischen Bauteilen als Unterputzvorrichtung,
- Fig. 3: eine Aufputzanordnung des Aufnahmeteils oder Aufnahmegehäuses,
- Fig. 4 und 5: zwei verschiedene elektrische Bauteile als Aufputzanordnung, die mit Hilfe von Stecker und Kupplung beliebig verändert werden können,
- Fig. 6: ein Aufnahmeteil ohne das Aufnahmegehäuse als Unterputzanordnung
- Fig. 7: ein weiteres Ausführungsbeispiel.

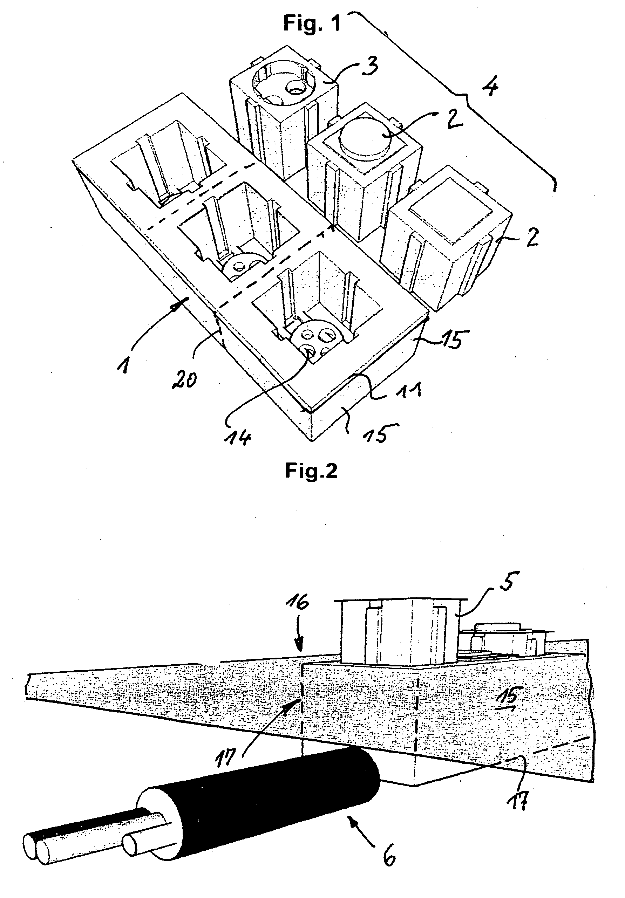

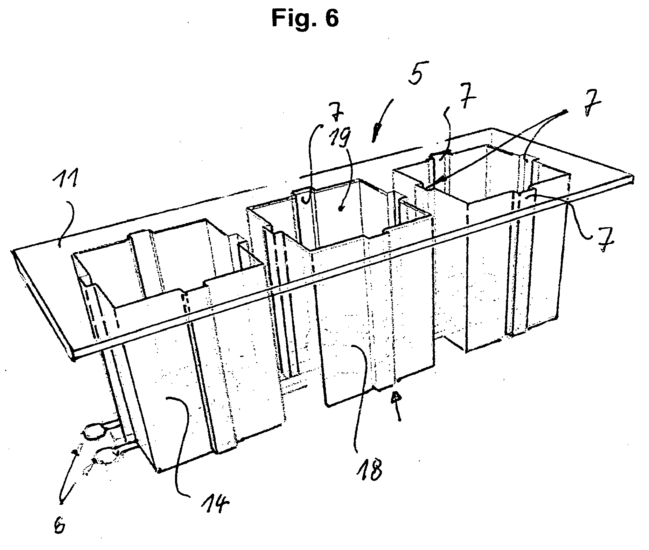

In Fig. 1 ist eine Vorrichtung 1 zur Aufnahme von elektrischen Bauteilen 4 wie Schalter 2, Steckdosen 3, Bewegungsmelder, Sensoren und/oder Fühler zur Steuerung des Raumklimas oder auch zur Überwachung des einzelnen Raums vor Einbruch oder anderen Störfällen. Zu der Vorrichtung zur Aufnahme von Schaltern, Steckdosen und elektrischen Bauteilen 1 gehört ein Aufnahmeteil das entweder als Aufnahmegehäuse 5 für Auf- oder insbesondere Unterputz oder gemäß Fig. 6 als flache Montageplatte ausgebildet ist und an eine elektrische Stromversorgung 6 oder elektronische Einrichtung angeschlossen werden kann, wenn das Aufnahmegehäuse in eine entsprechende in einer Wand eines Gebäudes vorgesehene Montageöffnung eingesetzt wird.

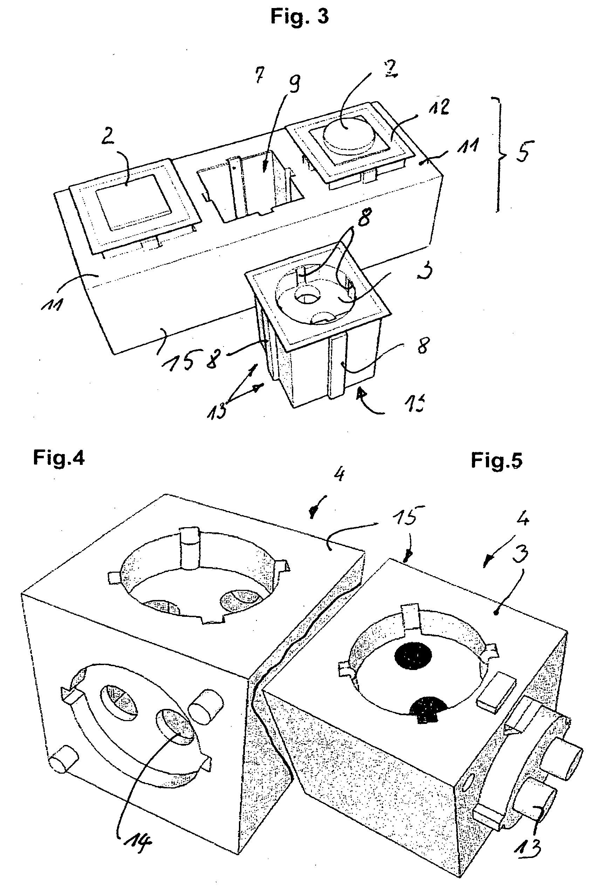

Das Aufnahmeteil oder Aufnahmegehäuse 5 kann mit Hilfe von Anschlusselementen ständig an die Stromversorgung 6 angeschlossen und einheitlich große und/oder eine oder mehrere standardisierte Ausnehmungen 9 gemäß Fig. 3 aufweisen, in die die elektrischen Bauteile 4 wie Schalter 2, Steckdosen 3 und Bewegungsmelder, Sensoren oder Fühler bzw. elektronischen Bauelemente einsetzbar sind und nach dem Einsetzvorgang mit Hilfe von Kontaktelementen direkt mit der Strom- bzw. Energieversorgung und/oder anderen elektrischen Einrichtungen in Verbindung stehen.

Gemäß den Ausführungsbeispielen in Fig. 1 bis Fig. 5 besteht das Aufnahmeteil oder Aufnahmegehäuse 5 aus einem rechteckförmigen Gehäuseteil 15, an das eine Maueröffnung in einer Gebäudewand angepasst werden muss, um das Aufnahmeteil oder Aufnahmegehäuse 5 in die Maueröffnung einsetzen zu können. An die obere Stirnkante des Gehäuseteils 15 schließt sich eine Abdeckplatte 11 an, die das Gehäuseteil 15 nach oben bündig abdeckt.

In der Abdeckplatte 11 befindet sich eine oder mehrere Ausnehmungen 9, deren Querschnitt so ausgebildet ist, dass in die Ausnehmung 9 je eine elektrisches Bauteil, beispielsweise ein Schalter 2, eine Steckdosen 3 und ein Bewegungsmelder bzw. Sensoren oder Fühler bzw. elektronische Bauelemente einsetzbar sind und nach dem Einsetzvorgang mit Hilfe von nachstehend beschriebenen Kontaktelementen direkt mit der Strom- bzw. Energieversorgung und/oder anderen elektrischen Einrichtungen in Verbindung gebracht werden können. Die in Fig. 1 bis 5 dargestellten elektrischen Bauteile 4 weisen einen quadratischen Querschnitt auf. Es ist jedoch auch möglich, einen anderen Querschnitt beispielsweise einen runden, ovalen mehreckförmigen Querschnitt zu wählen.

In Fig. 2 ist ein Wandteil 17 schematisch dargestellt, das eine Wandöffnung 16 aufweist, in die das Aufnahmeteil oder Aufnahmegehäuse 5 oder Gehäuseteil 15 eingesetzt ist und das zur Aufnahme von beliebigen elektrischen Bauteilen 4 dient. Das elektrische Bauteil 4 oder die elektrische Einrichtung kann ein Sender und/oder ein Empfangsteil sein. Mit diesen einzelnen Bauteilen 4 kann auch ein elektronisches Überwachungssystem aufgebaut bzw. -erweitert werden, das mittel- oder unmittelbar mit einer elektronischen Überwachungseinrichtung in Wirkverbindung steht.

Das Aufnahmeteil oder Aufnahmegehäuse 5 ist mit Hilfe von Kontaktelementen 18 im montierten Zustand ständig an die elektrische Stromversorgung 6 angeschlossen. Die Kontaktelemente 18 sind im Aufnahmeteil oder Aufnahmegehäuse 5 und an den elektrischen Bauteilen 4 vorgesehen und können beim Einsetzvorgang miteinander in Eingriff gebracht werden.

Im Aufnahmeteil oder Aufnahmegehäuse 5 sind ein oder mehrere Führungselemente 7 vorgesehen, die mit einem oder mehreren am elektrischen Bauteil 4 vorgesehenen Führungselementen 8 beim Einsetzvorgang des elektrischen Bauteils 4 in die Ausnehmung 9 des Aufnahmeteils oder Aufnahmegehäuses 5 zusammenwirken und das elektrische Bauteil 4 derart ausrichten, dass im eingesetzten Zustand das elektrische Bauteil 4 mit der elektrischen Stromversorgung 6 oder einem anderen elektronischen Bauelement in einer Wirkverbindung steht und auf diese Weise die Stromversorgung zum elektrischen Bauteil 4 herstellen.

Die in die Ausnehmung 9 des Aufnahmeteils oder Aufnahmegehäuses 5 eingesetzten elektrischen Bauteile 4 werden mit Hilfe eines in der Zeichnung nicht dargestellten Verriegelungselements festgesetzt. Das Verriegelungselement kann ein gegen die Wirkung einer Federkraft verstellbares Rastelement sein oder ein manuell verstellbarer Riegel, der das elektrische Bauteil 4 am Aufnahmeteil oder Aufnahmegehäuse 5 festsetzt. Soll das elektrische Bauteil 4 gegen ein anderes ausgewechselt werden, so kann das Verriegelungselement gelöst und das elektrische Bauteil 4 aus der Ausnehmung 9 herausgenommen werden.

Hierzu ist die Außenkontur der einzelnen elektrischen Bauteile 4 untereinander in etwa gleich, sodass sie in jede beliebige Ausnehmung 9 des Aufnahmeteils oder Aufnahmegehäuses 5 eingesetzt werden könnten.

Ferner ist es möglich, dass an jedes Aufnahmeteil oder Aufnahmegehäuse 5 ein weiteres Aufnahmeteil oder Aufnahmegehäuse 5 mit Hilfe von Form- und/oder Kraftschlusselementen 10 angeschlossen werden kann, um auf beliebige Weise die Größe des Aufnahmeteils oder Aufnahmegehäuses 5 zu verändern.

Das Aufnahmeteil 5 weist zumindest eine Abdeckplatte 11 auf, an die das Aufnahmegehäuse mit dem elektrischen Bauteile 4 mittels eines Rahmenteils 12 fest angeschlossen ist.

Die einzelnen Ausnehmungen 9 des Aufnahmegehäuses 5 weisen einen rechteckförmigen, runden, ovalen oder mehreckförmigen durch die Wandteile 17 gebildeten Querschnitt auf, der mit den übrigen Innenkonturen der anderen Ausnehmungen 9 in etwa übereinstimmt und der derart gestaltet ist, dass jedes elektrische Bauteil 4 mit unterschiedlicher Funktion in eine der Ausnehmungen 9 eingesetzt werden kann.

Wie aus Fig. 6 hervorgeht, sind an die Abdeckplatte 11 die vier Wandteile 17 angeschlossen und bilden die Ausnehmung 9 zur Aufnahme der elektrischen Bauteile 4.

Das Aufnahmeteil oder Aufnahmegehäuse 5 kann gemäß Fig. 3 auch als rechteckförmiger Gehäusekasten ausgebildet sein, in dem die Ausnehmungen 9 vorgesehen sind.

Ferner ist es möglich, an der Unterseite der elektrischen Bauteile 4 Stecker 13 vorzusehen, die in entsprechende Steckerkupplungen 14 eingesetzt werden können. Diese sind am Boden der jeweiligen Ausnehmung 9 vorgesehen. Die einzelnen elektrischen Bauteile 4 weisen gemäß Fig. 4 und 5 stirnseitig Stecker 13 bzw. Steckerkupplungen 14 auf, sodass beliebig viele elektrische Bauteile 4 stromführend miteinander verbunden werden können. Gemäß Fig. 1 ist die Trennlinie der einzelnen elektrischen Bauteile 4 durch eine gestrichelte Linie 20 angedeutet. Alle zusammengesteckten elektrischen Bauteile 4 können auf diese Weise durch die elektrische Stromversorgung 6 mit Strom versorgt werden.

Ferner können zumindest sind jeweils zwei Führungselemente 7, 8 in der Ausnehmung 9 und an dem elektrischen Bauteil 4 als stromführendes Kontaktelement ausgebildet sein. Die stromführenden Kontaktelemente in der Ausnehmung 9 und am elektrischen Bauteil 4 sind im Bereich des Bodens der Ausnehmung 9 platziert. Werden die elektrischen Bauteile 4 in die Ausnehmung 9 eingesetzt, so können die einzelnen Aufnahmeteile oder das Aufnahmegehäuse 5, die an die Stromversorgung 6 angeschlossen sind, mit Hilfe der stromführenden Kontaktelemente den Strom an die anderen elektrischen Bauteile 4 weiterleiten.

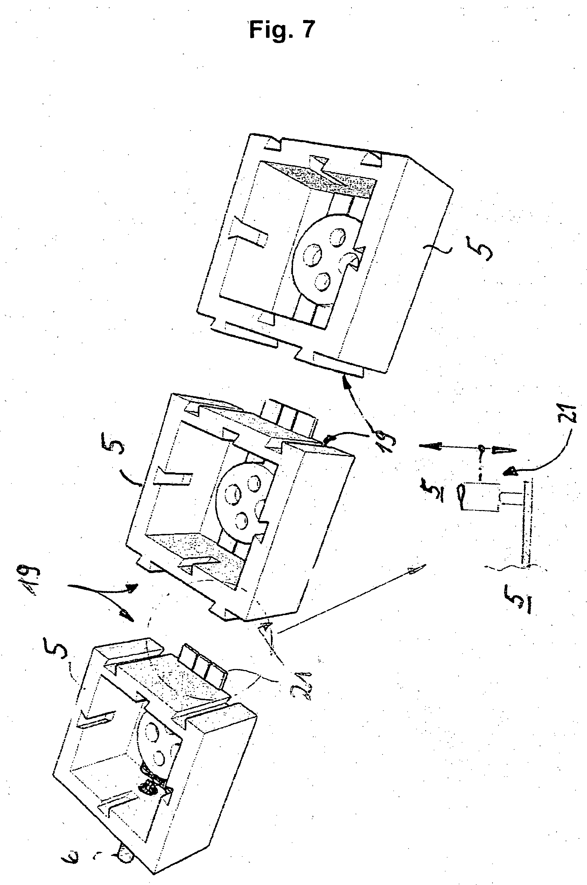

Nach einem weiteren Ausführungsbeispiel gemäß Fig. 7 kann das Aufnahmeteil oder Aufnahmegehäuse 5 mit Hilfe von Anschlusselementen ständig an die Stromversorgung 6 angeschlossen werden. Ferner ist es möglich, ein Aufnahmeteil oder Aufnahmegehäuse 5 durch den Anschluss eines weiteren Aufnahmeteils oder Aufnahmegehäuses 5 auf einfache Weise zu erweitern. Die Anschlusselemente können als Kraft- und/oder Formschlusselemente 19 augebildet und jeweils an den sich gegenüberliegenden Stirnflächen von zwei zu verbindenden Aufnahmeteilen oder Aufnahmegehäusen 5 vorgesehen sein.

Hierzu können die Kraft- und/oder Formschlusselemente 19 als ineinander fügbare Kupplungsteile, insbesondere als Schwalbenschwanzführungen, ausgeführt sein, sodass ein Aufnahmeteil oder Aufnahmegehäuse 5 von oben her in den angrenzenden Kupplungsteil des Aufnahmeteils oder Aufnahmegehäuses 5 eingeschoben werden kann und nach dem Einschubvorgang die stromführenden Teile 21 zur Stromversorgung der aneinander gekuppelten Aufnahmeteile oder Aufnahmegehäuse 5 miteinander in Kontakt gebracht werden können.

Die stromführenden Verbindungselemente 21 können als senkrecht stehende Kupplungsbuchsen und Kupplungsstecker ausgebildet sein, sodass beim Einsetzvorgang des einen Aufnahmeteils oder Aufnahmegehäuses 5 in das andere Aufnahmeteil Kupplungsbuchse und Kupplungsstecker automatisch miteinander verbunden werden und dadurch die Stromversorgung unter den einzelnen Aufnahmeteilen oder Aufnahmegehäusen 5 sichergestellt ist.

### Bezugszeichenliste

- 1: Vorrichtung zur Aufnahme von Schaltern, Steckdosen und elektrischen Bauteilen
- 2: Schalter
- 3: Steckdose
- 4: elektrisches Bauteil
- 5: Aufnahmeteil, Aufnahmegehäuse
- 6: elektrische Stromversorgung
- 7: Führungselement
- 8: Führungselement
- 9: Ausnehmung
- 10: Form- und/oder Kraftschlusselement
- 11: Abdeckplatte
- 12: Rahmenteil
- 13: Stecker
- 14: Steckerkupplung
- 15: Gehäuseteil
- 16: Wandöffnung
- 17: Wandteil
- 18: Kontaktelement
- 19: Kraft- und/oder Formschlusselement
- 20: gestrichelte Linie
- 21: stromführenden Verbindungselemente

## Patentansprüche

1. Vorrichtung (1) zur Aufnahme von elektrischen Bauteilen (4) wie Schalter (2), Steckdosen (3), Bewegungsmelder, Sensoren und/oder Fühler zur Steuerung des Raumklimas mit einem Aufnahmeteil oder Aufnahmegehäuse (5) für Auf- oder insbesondere Unterputz, das an eine elektrische Stromversorgung (6) angeschlossen werden kann, **wobei das Aufnahmeteil** oder Aufnahmegehäuse (5) **zur Aufnahme von mehreren nacheinander angeordneten elektrischen Bauteilen (4)** mit Hilfe von Anschlusselementen ständig an die Stromversorgung (6) angeschlossen ist und einheitlich große und/oder eine oder mehrere standardisierte Ausnehmungen (9) aufweist, in die die elektrischen Bauteile (4) wie Schalter (2), Steckdosen (3) und Bewegungsmelder, Sensoren oder Fühler einsetzbar sind und nach dem Einsetzvorgang mit Hilfe von Kontaktelementen direkt mit der Stromversorgung und/oder anderen elektrischen Einrichtungen in Vebindung stehen,
**gekennzeichnet durch folgende Merkmale:**
**a)** dass das Aufnahmeteil oder Aufnahmegehäuse (5) in an die elektrische Stromversorgung (6), montiertem Zustand ständig anschließbare Kontakte aufweist, die **durch** Einsetzen des elektrischen Bauteils (4) **von oben in das Aufnahmeteil oder Aufnahmegehäuse** (5) automatisch mit der elektrischen Stromversorgung (6) verbunden sind;
**b)** dass im Aufnahmeteil oder Aufnahmegehäuse (5) ein oder mehrere Führungselemente (7) vorgesehen sind, die mit einem oder mehreren am elektrischen Bauteil (4) vorgesehenen Führungselementen (8) beim Einsetzvorgang des elektrischen Bauteils (4) in die Ausnehmung (9) des Aufnahmeteils oder Aufnahmegehäuses (5) zusammenwirken und das elektrische Bauteil (4) derart ausrichten, dass im eingesetzten Zustand das elektrische Bauteil (4) mit der elektrischen Stromversorgung (6) oder einem anderen elektronischen Bauelement in einer Wirkverbindung steht;
c) dass die Außenkontur der einzelnen elektrischen Bauteile (4) in etwa gleich ist, sodass sie in jede beliebige Ausnehmung (9) des Aufnahmeteils oder Aufnahmegehäuses (5) eingesetzt werden können;
**d)** dass die einzelnen Ausnehmungen (9) des Aufnahmegehäuses (5) einen rechteckförmigen, runden, ovalen oder mehreckförmigen Querschnitt aufweisen, der mit den übrigen Innenkonturen in etwa übereinstimmt und derart gestaltet ist, dass jedes elektrische Bauteil (4) mit unterschiedlicher Funktion in die Ausnehmung (9) eingesetzt werden kann; und
e) dass das Aufnahmeteil oder Aufnahmegehäuse (5) um weitere Aufnahmeteile oder Aufnahmegehäuse (5) erweitert werden kann,
die untereinander mit Hilfe von Verbindungselementen, insbesondere Kraft- und/oder Formschlusselementen (19), verbunden werden.

2. Vorrichtung nach Anspruch 1
**dadurch gekennzeichnet,**
**dass** die elektrische Einrichtung ein Sender und/oder Empfangsteil ist.

3. Vorrichtung nach einem der vorhergehenden Ansprüche,
**dadurch gekennzeichnet,**
**dass** an jedes Aufnahmeteils oder Aufnahmegehäuse (5) ein weiteres Aufnahmeteil oder Aufnahmegehäuse (5) mit Hilfe von Form- und/oder Kraftschlusselementen (10) angeschlossen werden kann.

4. Vorrichtung nach einem der vorhergehenden Ansprüche,
**dadurch gekennzeichnet,**
**dass** das Aufnahmeteil (5) zumindest eine Abdeckplatte (11) aufweist, an die das Aufnahmegehäuse zur Aufnahme der elektrischen Bauteile (4) angeschlossen ist.

5. Vorrichtung nach einem der vorhergehenden Ansprüche,
**dadurch gekennzeichnet,**
**dass** das elektrische Bauteil (4) im oberen Bereich ein Rahmenteil (12) aufweist, das sich zumindest an die Abdeckplatte (11) anschließt und/oder mit dieser fest verbunden oder lösbar verriegelt werden kann.

6. Vorrichtung nach einem der vorhergehenden Ansprüche,
**dadurch gekennzeichnet,**
**dass** das Aufnahmeteil oder Aufnahmegehäuse (5) als rechteckförmiger Gehäusekasten ausgebildet ist.

7. Vorrichtung nach einem der vorhergehenden Ansprüche,
**dadurch gekennzeichnet,**
**dass** an der Unterseite der elektrischen Bauteile (4) Stecker (13) vorgesehen sind, die in entsprechende Steckerkupplungen (14) eingesetzt werden können.

8. Vorrichtung nach einem der vorhergehenden Ansprüche,
**dadurch gekennzeichnet,**
**dass** die einzelnen Aufnahmeteile oder Aufnahmegehäuse (5) mit Hilfe von stromführenden Kontaktelementen (21) miteinander verbunden sind.

9. Vorrichtung nach Anspruch 1,
**dadurch gekennzeichnet,**
**dass** das Kraft- und/oder Formschlusselement (19) derart als Einschubelement, insbesondere als Schwalbenschwanzführung, ausgeführt ist, dass ein Aufnahmeteil oder Aufnahmegehäuse (5) von oben her in das angrenzende Aufnahmeteil oder Aufnahmegehäuse (5) eingeschoben werden kann und nach dem Einschubvorgang die stromführenden Teile (21) zur Stromversorgung der Aufnahmeteile oder Aufnahme-gehäuse (5) miteinander in Kontakt gebracht werden können.

## Claims

1. Apparatus (1) for receiving electrical components (4), such as switches (2), plug sockets (3), motion detectors, sensors and/or probes, for controlling the climate in a room, comprising a receptacle part or receptacle housing (5) for surface-mounting or, in particular, flush-mounting which can be connected to an electrical power supply system (6), wherein the receptacle part or receptacle housing (5) for receiving a plurality of electrical components (4) which are arranged in series is permanently connected to the power supply system (6) with the aid of connection elements and has uniform-size and/or one or more standardized recesses (9) into which the electrical components (4), such as switches (2), plug sockets (3) and motion detectors, sensors or probes, can be inserted and, after the insertion process, the said electrical components are directly connected to the power supply system and/or other electrical devices with the aid of contact elements,
**characterized by** the following features:
a) the receptacle part or receptacle housing (5) has contacts which can be permanently connected in the state in which said receptacle part or receptacle housing is mounted on the electrical power supply system (6), the said contacts being automatically connected to the electrical power supply system (6) by insertion of the electrical component (4) into the receptacle part or receptacle housing (5) from above;
b) one or more guide elements (7) are provided in the receptacle part or receptacle housing (5), the said guide elements interacting with one or more guide elements (8), which are provided on the electrical component (4), during the process of inserting the electrical component (4) into the recess (9) in the receptacle part or receptacle housing (5), and orienting the electrical component (4) in such a way that, in the inserted state, the electrical component (4) is operatively connected to the electrical power supply system (6) or another electronic component;
c) the outer contour of the individual electrical components (4) is approximately identical, so that they can be inserted into any desired recess (9) in the receptacle part or receptacle housing (5);
d) the individual recesses (9) in the receptacle housing (5) have a rectangular, round, oval or polygonal cross section which approximately corresponds to the other inner contours and is configured in such a way that each electrical component (4) with a different function can be inserted into the recess (9); and
e) the receptacle part or receptacle housing (5) can be expanded by further receptacle parts or receptacle housings (5) which can be connected to one another with the aid of connecting elements, in particular force-fitting and/or interlocking elements (19).

2. Apparatus according to Claim 1,
**characterized**
**in that** the electrical device is a transmitter and/or receiving unit.

3. Apparatus according to either of the preceding claims,
**characterized**
**in that** a further receptacle part or receptacle housing (5) can be connected to each receptacle part or receptacle housing (5) with the aid of interlocking and/or force-fitting elements (10).

4. Apparatus according to one of the preceding claims,
**characterized**
**in that** the receptacle part (5) has at least one cover plate (11) to which the receptacle housing for receiving the electrical components (4) is connected.

5. Apparatus according to one of the preceding claims,
**characterized**
**in that** the electrical component (4) has a frame part (12) in the upper region, the said frame part at least adjoining the cover plate (11) and/or it being possible for the said frame part to be fixedly connected or releasably locked to the said cover plate.

6. Apparatus according to one of the preceding claims,
**characterized**
**in that** the receptacle part or receptacle housing (5) is in the form of a rectangular housing case.

7. Apparatus according to one of the preceding claims,
**characterized**
**in that** plugs (13) are provided on the bottom face of the electrical components (4), it being possible for the said plugs to be inserted into corresponding plug couplings (14).

8. Apparatus according to one of the preceding claims,
**characterized**
**in that** the individual receptacle parts or receptacle housings (5) are connected to one another with the aid of current-carrying contact elements (21).

9. Apparatus according to Claim 1,
**characterized**
**in that** the force-fitting and/or interlocking element (19) is designed as an insertion element, in particular as a dovetail guide, in such a way that a receptacle part or receptacle housing (5) can be inserted into the adjoining receptacle part or receptacle housing (5) from above and, after the insertion process, the current-carrying parts (21) can be brought into contact with one another in order to supply power to the receptacle parts or receptacle housings (5).

## Revendications

1. Dispositif (1) destiné à accueillir des composants électriques (4) comme des commutateurs (2), des prises (3), des détecteurs de mouvement, des capteurs et/ou des sondes servant à contrôler le climat ambiant, comprenant une partie d'accueil ou un boîtier d'accueil (5) à montage apparent ou notamment encastré qui peut être raccordé à une alimentation électrique (6), la partie d'accueil ou le boîtier d'accueil (5) destiné à accueillir plusieurs composants électriques (4) disposés de manière successive étant raccordé en permanence à l'alimentation électrique (6) à l'aide d'éléments de raccordement et possédant des cavités (9) de taille uniforme et/ou une ou plusieurs cavités (9) normalisées dans lesquelles peuvent être insérés les composants électriques (4) tels que des commutateurs (2), des prises (3) et des détecteurs de mouvement, des capteurs ou des sondes et, après l'opération d'insertion, sont directement en liaison avec l'alimentation électrique et/ou d'autres appareils électriques à l'aide d'éléments de contact,
**caractérisé par** les caractéristiques suivantes :
a) en ce que la partie d'accueil ou le boîtier d'accueil (5) possède des contacts qui, à l'état monté, peuvent être raccordé en permanence à l'alimentation électrique (6) et qui sont reliés automatiquement à l'alimentation électrique (6) par l'insertion du composant électrique (4) par le haut dans la partie d'accueil ou le boîtier d'accueil (5) ;
b) en ce qu'un ou plusieurs éléments de guidage (7) sont prévus dans la partie d'accueil ou le boîtier d'accueil (5), lesquels coopèrent avec un ou plusieurs éléments de guidage (8) présents sur le composant électrique (4) lors de l'opération d'insertion du composant électrique (4) dans la cavité (9) de la partie d'accueil ou du boîtier d'accueil (5) et alignent le composant électrique (4) de telle sorte qu'à l'état inséré, le composant électrique (4) se trouve dans une liaison active avec l'alimentation électrique (6) ou un autre composant électronique ;
c) en ce que le profil extérieur des composants électriques (4) individuels est approximativement identique, de sorte qu'ils peuvent être insérés dans n'importe quelle cavité (9) de la partie d'accueil ou du boîtier d'accueil (5) ;
d) en ce que les cavités (9) individuelles du boîtier d'accueil (5) présentent une section transversale rectangulaire, ronde, ovale ou polygonale qui coïncide approximativement avec les autres profils intérieurs et qui est configurée de telle sorte que chaque composant électrique (4) ayant une fonction différente peut être inséré dans la cavité (9) ; et
e) en ce que la partie d'accueil ou le boîtier d'accueil (5) peut être étendu avec des parties d'accueil ou des boîtiers d'accueil (5) supplémentaires qui sont reliés les uns avec les autres à l'aide d'éléments de liaison, notamment des éléments d'assemblage à force et/ou par complémentarité de formes (19).

2. Dispositif selon la revendication 1, **caractérisé en ce que** l'appareil électrique est un émetteur et/ou une partie de réception.

3. Dispositif selon l'une des revendications précédentes, **caractérisé en ce qu'**à chaque partie d'accueil ou boîtier d'accueil (5) peut être raccordé une partie d'accueil ou un boîtier d'accueil (5) supplémentaire à l'aide d'éléments d'assemblage à force et/ou par complémentarité de formes (10).

4. Dispositif selon l'une des revendications précédentes, **caractérisé en ce que** la partie d'accueil (5) possède au moins une plaque de protection (11) à laquelle est raccordé le boîtier d'accueil en vue d'accueillir les composants électriques (4).

5. Dispositif selon l'une des revendications précédentes, **caractérisé en ce que** le composant électrique (4) possède dans la partie supérieure une partie formant cadre (12) qui se raccorde au moins à la plaque de protection (11) et/ou peut être relié à demeure ou verrouillé de manière a movible à celle-ci.

6. Dispositif selon l'une des revendications précédentes, **caractérisé en ce que** la partie d'accueil ou le boîtier d'accueil (5) est réalisé sous la forme d'un caisson de boîtier de forme rectangulaire.

7. Dispositif selon l'une des revendications précédentes, **caractérisé en ce que** des fiches (13) sont prévues sur le côté inférieur des composants électriques (4), lesquelles peuvent être insérées dans des coupleurs d'enfichage (14) correspondants.

8. Dispositif selon l'une des revendications précédentes, **caractérisé en ce que** les parties d'accueil ou boîtiers d'accueil (5) individuels sont reliés ensemble à l'aide d'éléments de contact (21) conducteurs de courant.

9. Dispositif selon la revendication 1, **caractérisé en ce que** l'élément d'assemblage à force et/ou par complémentarité de formes (19) est réalisé sous la forme d'un élément embrochable, notamment sous la forme d'un guide à queue d'aronde, de telle sorte qu'une partie d'accueil ou un boîtier d'accueil (5) peut être embroché par le haut dans la partie d'accueil ou le boîtier d'accueil (5) adjacent et, après l'opération d'embrochage, les parties conductrices de courant (21) peuvent être mises mutuellement en contact pour l'alimentation électrique des parties d'accueil ou des boîtiers d'accueil (5).
